(19) Europäisches Patentamt / European Patent Office / Office européen des brevets

(11) **EP 4 095 271 A1**

(12) **EUROPEAN PATENT APPLICATION**
published in accordance with Art. 153(4) EPC

(43) Date of publication:
**30.11.2022 Bulletin 2022/48**

(21) Application number: **21743951.2**

(22) Date of filing: **22.01.2021**

(51) International Patent Classification (IPC):
**C21D 9/46** (2006.01)    **C22C 38/00** (2006.01)
**C22C 38/58** (2006.01)    **B62D 25/02** (2006.01)
**B62D 25/06** (2006.01)

(52) Cooperative Patent Classification (CPC):
**B62D 25/02; B62D 25/06; C21D 9/46; C22C 38/00;
C22C 38/58;** Y02T 10/82

(86) International application number:
**PCT/JP2021/002285**

(87) International publication number:
**WO 2021/149810 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.01.2020 JP 2020009753**

(71) Applicant: **NIPPON STEEL CORPORATION**
**Chiyoda-ku**
**Tokyo 100-8071 (JP)**

(72) Inventors:
• **NAGANO, Mai**
**Tokyo 100-8071 (JP)**
• **SAWA, Yasunori**
**Tokyo 100-8071 (JP)**
• **YONEMURA, Shigeru**
**Tokyo 100-8071 (JP)**

(74) Representative: **Zimmermann & Partner**
**Patentanwälte mbB**
**Postfach 330 920**
**80069 München (DE)**

(54) **PANEL**

(57)    A panel that is excellent in both appearance and dent resistance after being formed from a starting material is provided. The panel has a steel sheet including martensite, and a surface roughness parameter (Sa) at a flat part of a center-side portion of the panel is Sa ≤ 0.500 $\mu$m. In laths of the martensite, the panel has precipitates having a major axis of 0.05 $\mu$m to 1.00 $\mu$m and an aspect ratio of 3 or more in an amount of 15 precipitates/$\mu$m$^2$ or more. A ratio $YS_1/YS_2$ between a yield stress $YS_1$ measured in a tensile test specimen cut out from the flat part of the center-side portion of the panel and a yield stress $YS_2$ measured in a tensile test specimen cut out from an end part of the panel is 0.90 to 1.10.

FIG.1

Enlarged view

EP 4 095 271 A1

**Description**

TECHNICAL FIELD

The present invention relates to a panel.

BACKGROUND ART

In recent years, in order to protect the global environment, there is a demand to improve the fuel efficiency of automobiles. With regard to improving the fuel efficiency of automobiles, there is a demand to achieve even higher strengths in steel sheets used for automobiles in order to reduce the weight of the automobile body while securing safety. Such demands for increased strengthening are not limited to members that are structural members and pillars and the like, but are also increasing for outer panels (hood, fender panel, door panel, roof panel and the like) of automobiles. To respond to such demands, materials are being developed with the objective of achieving both strength and elongation (formability) in a compatible manner.

On the other hand, there is a tendency for the forming of exterior components of automobiles to become increasingly complicated. When the strength of a steel sheet is increased and the thickness is reduced in order to achieve a reduction in the weight, unevenness is liable to occur on the surface of the steel sheet during forming into a complicated shape. If unevenness occurs on the surface, there will be a deterioration in the appearance after forming. In the case of outer panels, because the design and surface quality are also important, and not just characteristics such as strength, outer panels are required to be excellent in appearance after forming. That is, outer panels of an automobile need to have an appearance (surface property) in which there is small surface roughness or patterns after forming.

With regard to the relationship between the appearance after forming and the material characteristics of a steel sheet to be applied to an outer panel, for example, Patent Document 1 discloses a ferritic thin steel sheet in which, in order to improve the surface property after stretch-forming, an area fraction of crystal having a crystal orientation within a range of $\pm 15°$ from a {001} plane parallel to a steel sheet surface is made 0.25 or less, and the average grain diameter of the crystal is made 25 $\mu$m or less.

LIST OF PRIOR ART DOCUMENT

PATENT DOCUMENT

Patent Document 1: JP2016-156079A

SUMMARY OF INVENTION

TECHNICAL PROBLEM

In addition to having a good surface property after starting material forming, outer panels of automobiles are also required to have good dent resistance. The term "dent resistance" refers to the difficulty for an indentation (dent) to be left after removing the load in a case where a localized load is applied to a panel for some reason. In the case of the body of an actual automobile, such dents occur when an outer panel of a door or the like is strongly pressed with a finger or the palm of a hand, or when the automobile body is hit by a flying stone while travelling and the like. A dent is formed as a result of plastic deformation in a place on the panel at which a load has been applied. Therefore, once the strain on the panel generated at a time when a load is applied to the panel reaches a certain magnitude, the strain remains even after the load is removed, and a dent is formed. The minimum value of a load that causes a certain residual strain in the panel is referred to as the "dent load", and the larger the dent load is, the better the dent resistance is. In Patent Document 1, there is no disclosure regarding improving dent resistance.

In consideration of the above background, one objective of the present invention is to provide a panel that is excellent in both appearance after being formed from a starting material and dent resistance.

SOLUTION TO PROBLEM

The gist of the present invention is a panel that is described hereunder.

(1) A panel having a steel sheet including martensite, wherein:

a surface roughness parameter (Sa) at a flat part of a center-side portion of the panel is Sa $\leq$ 0.500 $\mu$m;

in laths of the martensite, a number density of precipitates having a major axis of 0.05 $\mu$m to 1.00 $\mu$m and an aspect ratio of 3 or more is 15 precipitates/$\mu$m$^2$ or more; and

a ratio YS$_1$/YS$_2$ between a yield stress YS$_1$ measured in a tensile test specimen cut out from the flat part and a yield stress YS$_2$ measured in a tensile test specimen cut out from an end part of the panel is 0.90 to 1.10.

(2) The panel according to the above (1), wherein a ratio YS$_1$/TS$_1$ between the yield stress YS$_1$ and a tensile strength TS$_1$ of the tensile test specimen cut out from the flat part is 0.85 or more.

(3) The panel according to the above (1) or (2), wherein a hardness of the flat part is 133 to 300 Hv.

(4) The panel according to any one of the above (1) to (3), wherein a sheet thickness of the flat part is 0.20 mm to 0.60 mm.

(5) The panel according to any one of the above (1) to (4), wherein the steel sheet is a dual phase steel sheet.

(6) The panel according to any one of the above (1) to (5), wherein a tensile strength of the panel is 400 to 900 MPa.

ADVANTAGEOUS EFFECT OF INVENTION

According to the present invention, a panel that is excellent in both appearance after being formed from a starting material and dent resistance can be provided.

BRIEF DESCRIPTION OF DRAWINGS

[Figure 1] Figure 1 is an image diagram illustrating a precipitation state of precipitates in a high-strength steel sheet as the starting material of a steel sheet according to the present embodiment.

[Figure 2] Figure 2(A) is a plan view of a component used for dent resistance evaluation.

Figure 2(B) is a cross-sectional view along a line IIB-IIB in Figure 2(A).

[Figure 3] Figure 3 is a side view of a testing device for measuring the dent resistance of a component and is a cross-sectional view of the component, and with respect to the component, shows a cross section along a line IIB-IIB in Figure 2(A).

[Figure 4] Figure 4 is a graph showing the relation between an index and a dent depth of respective components.

DESCRIPTION OF EMBODIMENT

Hereunder, first, the circumstances leading to the conception of the present invention will be described, and then an embodiment will be described in detail.

<Circumstances leading to conception of present invention>

In order to reduce the weight of automobile bodies, the thinning of walls of automobile body members that constitute automobile bodies has been proceeding. Panels are included among such automobile body members. A panel is an integrally formed product. A panel is, for example, an exterior member of an automobile. An outer panel of a hood, a quarter panel such as a fender panel, a door outer panel, and a roof panel and the like can be mentioned as examples of a panel.

Such kinds of panels are formed by cutting a cold-rolled steel sheet, and then performing press forming, painting, and bake-finishing (bake hardening treatment) after the painting. Bake hardening is a phenomenon that occurs when interstitial elements (mainly carbon) move and adhere to dislocations (line defects that serve as an elementary process of plastic deformation) which enter a steel sheet due to cold plastic working (prestrain), and thereby inhibit movement of the dislocations so that the strength increases, and is also referred to as "strain aging". Such kind of steel sheet is usually subjected to a baking treatment as a heat treatment after final annealing. Here, it was found that the occurrence of surface unevenness during forming that is a cause of a deterioration in appearance after forming is due to inhomogeneous deformation during forming which is caused by inhomogeneity in strength within the steel sheet of the panel. Therefore, it is conceivable to perform tempering of the panel starting material in order to improve the appearance by suppressing surface unevenness during forming by eliminating a difference in hardness between each part of the panel and increasing the homogeneity of each part of the panel. However, conventionally, it has been considered that when tempering is performed after the aforementioned final annealing, the bake hardening value decreases. This is because when tempering is performed, the solute carbon content decreases and as a result the bake hardening value is reduced. Furthermore, the yield stress and hardness are also reduced by the aforementioned tempering. However, as a result of diligent research, the inventors of the present application obtained the finding that, after the aforementioned final annealing, when tempering is performed within a temperature range in accordance with the Si (silicon) concentration of the panel starting material, and thereafter a bake hardening treatment is performed, the bake hardening value, on the contrary, increases. By increasing the bake hardening value, the yield stress increases and as a result the dent resistance improves. As a result of further diligent research, the inventors of the present application conceived of the idea of performing the aforementioned tempering on a panel starting material which has a property of being excellent in appearance after forming, to thereby provide a panel which is excellent in appearance after forming and is also excellent in dent resistance.

<Description of embodiment>

Hereunder, an embodiment of the present invention is described while referring to the accompanying drawings.

<Panel>

The aforementioned panels can be mentioned as examples of the panel used in the present embodiment. The panel is produced by the production method described above. The panel has a steel sheet including martensite, and a paint layer formed on the steel sheet. The steel sheet may include a plating layer on the surface thereof, or a plating layer need not be formed on the surface thereof. Note that, in a case where the steel sheet has a plating layer, the phrase "surface of the steel sheet" means the surface of the steel sheet excluding the plating layer. The panel may be composed of only a steel sheet that does not have a paint layer.

The panel includes three parts. Specifically, the panel includes (i) an edge part, (ii) an end part, and (iii) a center-side portion as a portion other than the edge part and the end part.

The edge part of (i) above is a portion that is bent by hemming (HEM) processing or is welded by spot welding or the like to be fixed to another component. The end part of (ii) above is a portion which is located on the center side of the panel from the edge part and is a portion which is separated from a portion that is fixed to another component by hemming processing or welding or the like. This end part is a place that, for example, is advanced by several mm toward the center side of the panel from the edge part, and is a place which is substantially unaffected by processing for fixing the panel to another component. In this case, the phrase "substantially unaffected" means that the amount of change in characteristics caused by processing for fixing the panel to another component is within the range of several percent. The center-side portion of (iii) above is a portion that is visually recognized from the outside of the automobile as the exterior of the automobile. In the present description, a place where, for example, the radius of curvature is 500 mm or more in the center-side portion of the panel is referred to as a "flat part".

<Surface roughness parameter (Sa) at flat part of center-side portion of panel is Sa ≤ 0.500 μm>

In the present embodiment, preferably the surface roughness parameter Sa at a flat part of the center-side portion of the panel is $0 \leq Sa \leq 0.500$ μm. If a paint layer is formed on the panel, the flat part in this case means a flat part of the entire panel that includes the paint layer. The term "surface roughness parameter" means, for example, on the surface of a 3 mm square test specimen with respect to the flat part of the panel, an arithmetic mean height of heights from a mean surface (surface where the height is zero). In the present embodiment, to evaluate the surface roughness parameter Sa, first, the surface property of a 3 mm square surface of the flat part of the panel is measured with a laser microscope. Next, the measurement surface that was measured and obtained is passed through a low-pass filter (λs) defined by JIS B0601: 2013 to remove wavelength components of 0.8 mm or less from the measurement surface. Then, a surface roughness parameter (Sa) defined by ISO 25178 is evaluated with respect to the measurement surface that was smoothed by the low-pass filter (λs). If the surface roughness parameter Sa is greater than 0.500 μm, regardless of the presence or absence of a paint layer, the unevenness of the surface of the panel will be large, and there will be a deterioration in the appearance after forming of the panel. Note that, by acquiring the surface roughness parameter Sa based on a measurement surface that was smoothed by removing wavelength components of 0.8 mm or less from the measurement surface as described above, the true value of the surface roughness parameter Sa from which measurement errors in the laser microscope (errors attributable to the measurement accuracy of the laser microscope, errors attributable to dust that became attached during the measurement, errors attributable to a scratch that occurred during preparation of the test specimen, or the like) have been removed can be accurately detected.

An example of control factors (requirements for the steel micro-structure) for realizing the aforementioned surface roughness parameter Sa are described hereunder.

<Regarding steel micro-structure of outer layer region>

In the steel sheet according to the present embodiment, when the sheet thickness is represented by "t", a depth range from the surface to t/4 in a sheet thickness direction is divided into two regions, of which a depth range from the surface as a starting point to a depth position of 20 μm in the sheet thickness direction (depth direction) of the steel sheet as an end point is defined as an "outer layer region", and a range on the center side of the steel sheet relative to the outer layer region is defined as an "interior region". Note that, in a case where the steel sheet has a plating layer, the surface of the steel sheet excluding the plating layer is defined as the starting point of the outer layer region.

As mentioned above, as a result of studies conducted by the present inventors it was found that the occurrence of surface unevenness during forming is caused by inhomogeneous deformation during forming that is attributable to inhomogeneity in the steel strength within micro-regions. In particular, with regard to the occurrence of surface unevenness, it was found that the influence of the steel micro-structure in an outer layer region that is a range of 0 to 20 μm from the surface in the sheet thickness direction (range from the surface to a position at 20 μm from the surface in the sheet thickness direction) is significant. Therefore, in the steel sheet according to the present embodiment, the steel micro-structure in the outer layer region is, for example, controlled as described hereunder.

As a micro-structure requirement for the outer layer region, preferably the outer layer region includes ferrite as a primary phase, a volume fraction of martensite is 0.01 to 15.0%, and the volume fraction of martensite is less than a volume fraction of martensite in the interior region.

Preferably the volume fraction of ferrite that is the primary phase is within a range of 50% or more.

Further, preferably the volume fraction of martensite in the steel micro-structure of the outer layer region is less than the volume fraction of martensite in the interior region.

The volume fraction of martensite in the outer layer region can be determined by the following method.

A sample (size is approximately 20 mm in the rolling direction × 20 mm in the width direction × the thickness of the steel sheet) for steel micro-structure (microstructure) observation is collected from the flat part of the obtained steel sheet, and the steel micro-structure (microstructure) in a range from the outer layer to the 1/4 sheet thickness position is observed using an optical microscope to calculate the area fraction of martensite in a range from the surface of the steel sheet (in a case where plating is present, the surface excluding the plating layer) to a depth of 20 μm. To prepare the sample, a sheet thickness cross section in a direction orthogonal to the rolling direction is polished as an observation section and is etched with the LePera reagent.

"Microstructures" are classified based on an optical micrograph at a magnification of x500 obtained after etching with the LePera reagent. When optical microscope observation is performed after the LePera etching, the respective micro-structures are observed in different colors, for example, bainite is observed as black, martensite (including tempered martensite) is observed as white, and ferrite is observed as gray, and hence martensite and hard micro-structures other than martensite can be easily distinguished from each other.

In a region from the outer layer to a 1/4 thickness position in the steel sheet etched with the LePera reagent, 10 visual fields are observed at a magnification of ×500, a region portion from the outer layer to a position of 20 μm of the steel sheet in the micro-structure image is designated, and image analysis is performed using image analysis software "Photoshop CS5" manufactured by Adobe Inc. to determine the area fraction of martensite. As the image analysis method, for example, a method is adopted in which a maximum lightness value Lmax and a minimum lightness value Lmin of the image are acquired from the image, and a portion that has picture elements having a lightness from Lmax - 0.3(Lmax - Lmin) to Lmax is set as a white region, a portion that has picture elements having a lightness from Lmin to Lmin + 0.3(Lmax - Lmin) is set as a black region, a portion other than the white and black regions is set as a gray region, and the area fraction of martensite that is the white region is calculated. The area fraction of martensite is measured by performing image analysis in a similar manner as described above for the visual fields at the total of 10 places, and the obtained area fraction values are averaged to calculate the volume fraction of martensite in the outer layer region.

Further, as a micro-structure requirement for the outer layer region, preferably the average grain diameter of martensite is 0.01 to 4.0 μm.

The average grain diameter of martensite in the outer layer region can be determined by the following method.

Similarly to the method described above, 10 visual fields are observed at a magnification of x500 in a region from the outer layer to a 1/4 thickness position in the steel sheet etched with the LePera reagent, a region of 20 μm × 200 μm from the outer layer of the steel sheet in the micro-structure image is selected, and image analysis is performed in the same manner as described above using image analysis software "Photoshop CS5" manufactured by Adobe Inc. to calculate the area occupied by martensite and the number of grains of martensite, respectively. By adding up the values and dividing the area occupied by martensite by the number of grains of martensite, the average area per grain of martensite is calculated. The equivalent circular diameter is calculated based on the area and the number of grains, and the calculated equivalent circular diameter is adopted as the average grain diameter of martensite.

In the steel sheet according to the present embodiment, the steel micro-structure other than ferrite and martensite is a hard micro-structure (other structure), and for example is any one kind or more among perlite, retained austenite, and bainite. From the viewpoint of increasing strength, preferably the hard micro-structure (other structure) is one or more kinds including bainite.

As a micro-structure requirement for the outer layer region, preferably ferrite is the primary phase, martensite is the secondary phase, and a hard micro-structure other than ferrite and martensite is the other structure. More specifically, in the outer layer region, preferably the volume fraction of ferrite is 50% or more, the volume fraction of martensite is 0.01 to 15.0%, and the volume fraction of the other structure is 0 to 49.99%, and the total of the micro-structures is 100%. In the outer layer region, preferably the total volume fraction of the volume fractions of ferrite and the secondary phase is 50.01% or more, more preferably is 65.0% or more, and further preferably is 85% or more. Further, in the outer layer region, the volume fraction of the other structure is preferably 35% or less, and more preferably is 15% or less.

<Regarding steel micro-structure of interior region>

In the present embodiment, although the steel micro-structure of the interior region does not substantially affect the surface roughness parameter Sa, preferably the steel micro-structure of the interior region has the following micro-structure requirements. That is, in the steel sheet according to the present embodiment, after controlling the steel micro-structure of the outer layer region as described above, preferably the steel micro-structure of the interior region which is the range from a position that is more than 20 $\mu$m from the surface in the sheet thickness direction to a position at 1/4 of the sheet thickness in the sheet thickness direction from the surface (when the sheet thickness is represented by "t": t/4) has the following micro-structure requirements.

As a micro-structure requirement for the interior region, preferably ferrite is the primary phase, and a volume fraction of martensite is 2.0 to 25.0%.

Preferably the volume fraction of ferrite that is the primary phase is within a range of 50% or more.

As a micro-structure requirement for the interior region, preferably ferrite is the primary phase, martensite is the secondary phase, and a hard micro-structure other than ferrite and martensite is the other structure. More specifically, in the interior region, preferably the volume fraction of ferrite is 50% or more, the volume fraction of martensite is 2.0 to 25.0%, and the volume fraction of the other structure is 0 to 48.0%, and the total of the micro-structures is 100%. In the interior region, preferably the total volume fraction of the volume fractions of ferrite and the secondary phase is 52.0% or more, and preferably is 75.0% or more, and more preferably is 90.0% or more. Further, in the interior region, the volume fraction of the other structure is preferably 25% or less, and more preferably is 10% or less.

Further, as a micro-structure requirement for the interior region, preferably the average grain diameter of martensite is 1.0 $\mu$m or more and 5.0 $\mu$m or less, and is larger than the average grain diameter of martensite in the outer layer micro-structure.

With regard to the volume fraction and average grain diameter of martensite in the interior region also, the volume fraction and average grain diameter can be obtained by using a steel sheet etched with the LePera reagent, selecting a range from a position that is more than 20 $\mu$m from the surface of a sample in the sheet thickness direction to a position at 1/4 of the sheet thickness, and performing analysis by a similar method as the method used for analyzing the outer layer region.

In a case where the thickness of the steel sheet is more than 0.4 mm, preferably a range from more than 20 $\mu$m from the surface to 100 $\mu$m in the sheet thickness direction is adopted as the interior region.

<Other micro-structure>

<Number density of precipitates having a major axis of 0.05 $\mu$m to 1.00 $\mu$m and an aspect ratio of 3 or more in laths of martensite in steel sheet is 15 precipitates/$\mu$m$^2$ or more>

In the present embodiment, by means of a first heat treatment to be described later, preferably the number density of precipitates having a major axis of 0.05 $\mu$m or more and 1.00 $\mu$m or less and an aspect ratio of 1:3 or more is 15 precipitates/$\mu$m$^2$ or more. In the present embodiment, the term "aspect ratio" refers to the ratio between the longest diameter (major axis) of a precipitate to the longest diameter (minor axis) among the diameters of the precipitate that are orthogonal to the major axis. Note that, the precipitate is not particularly limited as long as the precipitate satisfies the requirements for the major axis and the aspect ratio described above, and examples thereof include carbides. In particular, in the present embodiment, there are cases where the precipitate contains iron carbide or consists of iron carbide. According to the present embodiment, by including a relatively large amount of such precipitates in the micro-structure, for example, the formation of dislocation cells caused by the entanglement of dislocations can be suppressed, the amount of locked dislocations caused by carbon or the like that diffuses during bake hardening can be increased, and as a result it becomes possible to significantly increase the bake hardening value. Note that, the size of the dislocation cells formed in martensite is approximately several tens of nm or more and several hundreds of nm or less. Therefore, in order to suppress the formation of dislocation cells, precipitates having approximately the same size as the dislocation cells are required. If the major axis is less than 0.05 $\mu$m, the formation of dislocation cells cannot be suppressed. Therefore, it is good to make the major axis of the precipitates 0.05 $\mu$m or more. The major axis is more preferably 0.10 $\mu$m or more. Further, if the major axis is greater than 1.00 $\mu$m, the precipitates coarsen and the solute carbon content is greatly reduced, and the bake hardening value is reduced. Therefore, it is good to make the major axis of the precipitates 1.00 $\mu$m or less. The major axis of the precipitates is more preferably 0.80 $\mu$m or less.

It is better for the shape of the precipitates to be a needle shape rather than a spherical shape, and the aspect ratio is preferably 1:3 or more. If the aspect ratio is less than 1:3, the shape of the precipitates is regarded as being spherical and the formation of dislocation cells cannot be suppressed. Therefore, the aspect ratio is set to 1:3 or more. The aspect ratio is more preferably 1:5 or more.

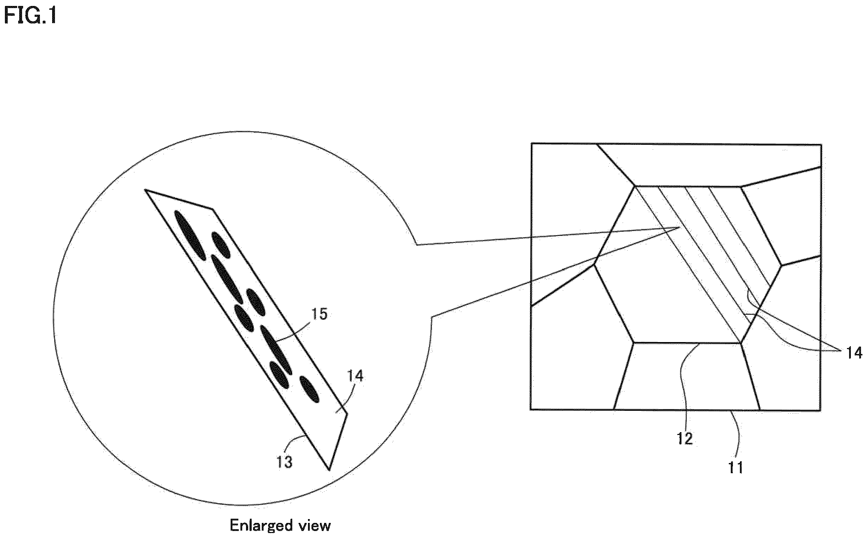

The place of precipitation of the precipitates is preferably within laths. This is because the place where dislocation cells are most easily formed is within laths, and dislocation cells are almost never seen between laths. Here, the term "lath" refers to a structure formed within prior-austenite grain boundaries by martensitic transformation. To facilitate understanding, Figure 1 is an image diagram illustrating the precipitation state of precipitates in a high-strength steel sheet as the starting material of the steel sheet according to the present embodiment. Referring to Figure 1, it can be seen that in a lath structure 13 formed within a prior-austenite grain boundary 12 during microsegregation of Si having a uniform structure 11, needle-like precipitates 15 are uniformly precipitated over the entire surface within laths 14, and not between the laths 14. The number density of the precipitates 15 is preferably 15 precipitates/$\mu$m$^2$ or more, more preferably is 20 precipitates/$\mu$m$^2$ or more, further preferably is 30 precipitates/$\mu$m$^2$ or more, and further preferably is 40 precipitates/$\mu$m$^2$ or more.

In the present embodiment, the morphology and number density of the precipitates 15 are determined by observation with an electron microscope, and are measured by, for example, observation with a transmission electron microscope (TEM). Specifically, a thin film sample is cut out from the interior region of the steel sheet, and is observed in a bright visual field. By using an appropriate magnification of $\times$10,000 to $\times$100,000, an area of 1 $\mu$m$^2$ is cut out, and the precipitates 15 having a major axis of 0.05 $\mu$m or more and 1 $\mu$m or less and an aspect ratio of 1:3 or more are counted and determined. This operation is performed in five or more consecutive visual fields, and the average is taken as the number density.

<Ratio $YS_1/YS_2$ between yield stress $YS_1$ measured in tensile test specimen cut out from flat part and yield stress $YS_2$ measured in tensile test specimen cut out from end part of panel is 0.90 to 1.10>

It was found that by a ratio $YS_1/YS_2$ between a yield stress $YS_1$ and a yield stress $YS_2$ being 0.90 to 1.10, strain enters uniformly the entire flat part and end part of the panel, and bake hardening during paint-baking occurs uniformly over the entire steel sheet that includes the flat part and the end part. If the ratio $YS_1/YS_2$ is less than 0.90 or is greater than 1.10, an imbalance will arise with respect to the strain amount in the entire flat part and end part of the panel, and an imbalance will arise with respect to the bake hardening value during paint-baking. The yield stress $YS_1$ can be determined by a tensile test performed in accordance with JIS Z 2241 using a Japanese Industrial Standard (JIS) Z2241-5 specimen obtained by cutting out the flat part of the panel in a direction perpendicular to the rolling direction. The yield stress $YS_2$ can be determined by a tensile test performed in accordance with JIS Z 2241 using a Japanese Industrial Standard (JIS) Z2241-5 specimen obtained by cutting out the end part of the panel in a direction perpendicular to the rolling direction.

[Ratio between yield stress $YS_1$ and tensile strength $TS_1$ of tensile test specimen cut out from flat part: 0.85 or more]

A ratio $YS_1/TS_1$ between the yield stress $YS_1$ and a tensile strength $TS_1$ of a tensile test specimen that was cut out from the flat part of the panel is preferably 0.85 or more. By this ratio being 0.85 or more, since a higher degree of strain can be imparted to the panel, and the yield stress of the panel increases, the dent resistance improves. The tensile strength $TS_1$ can be determined by a tensile test performed in accordance with JIS Z 2241 using a Japanese Industrial Standard (JIS) Z2241-5 specimen obtained by cutting out the flat part of the panel in a direction perpendicular to the rolling direction.

[Hardness of flat part: 133 to 300 Hv]

The hardness of the flat part of the panel is preferably 133 to 300 HV. By the Vickers hardness being within this range, it can be estimated that the tensile strength of the panel is 400 to 900 MPa. The hardness is measured in accordance with JIS Z2244: 2009 by a micro Vickers hardness meter. Measurement is conducted when the test force is set to 4.9 N at an arbitrary five points at a 1/4 depth position from the surface in a cross section of the flat part of the panel. The average of the obtained Vickers hardness values is taken as the hardness of the flat part of the panel.

[Sheet thickness of flat part: 0.20 mm to 0.60 mm]

The sheet thickness of the flat part of the panel is 0.20 mm to 0.60 mm. If this sheet thickness is less than the aforementioned lower limit, the panel will be too thin, and it will be difficult to sufficiently secure the dent resistance. On the other hand, if this sheet thickness is more than the aforementioned upper limit, the weight of the panel will be heavy and it will be hard to obtain a favorable evaluation as a lightweight panel.

[Steel sheet is a dual phase steel sheet]

The steel sheet is preferably a high-tensile strength steel sheet. Further, the steel sheet is preferably a dual phase steel sheet. A dual phase steel sheet includes ferrite as a soft micro-structure and martensite as a hard micro-structure, and is high in strength and is excellent in workability during panel forming. In DP steel, martensite and ferrite are distributed in a mosaic pattern, and hard portions at which transformation strengthening occurred and soft portions at which transformation strengthening did not occur coexist therein. When DP steel is used as a high-strength steel sheet, deformation due to cold plastic working (press forming working) mainly occurs in ferrite which is a soft micro-structure. Note that, it suffices that the high-strength steel sheet includes at least ferrite and martensite, and steel other than DP steel may be used.

[Tensile strength of panel: 400 to 900 MPa]

The tensile strength of the panel is preferably 400 to 900 MPa. If the tensile strength of the panel is less than the aforementioned lower limit, it will be difficult to achieve thinning of the panel while securing the strength of the panel. On the other hand, if the tensile strength of the panel is more than the aforementioned upper limit, the workability of the panel will decrease.

<Regarding plating layer>

The steel sheet according to the present embodiment may have a plating layer on the surface. Since corrosion resistance is improved by having a plating layer on the surface, preferably the steel sheet has a plating layer on the surface.
The plating to be applied is not particularly limited, and examples thereof include hot-dip galvanizing, galvannealing, electrogalvanizing, Zn-Ni plating (electro zinc alloy plating), Sn plating, Al-Si plating, electrogalvannealing, hot-dip zinc-aluminum alloy plating, hot-dip zinc-aluminum-magnesium alloy plating, hot-dip zinc-aluminum-magnesium alloy-Si plating, and zinc-Al alloy deposition.

<Regarding paint layer>

A paint layer is formed on the surface of the steel sheet according to the present embodiment. The paint layer is the part of the panel that is directly visible. In a case where a plating layer has been formed, the paint layer is formed on the plating layer. In a panel for an automobile, the thickness of the paint is about 100 $\mu$m. The paint layer in a panel for an automobile includes, in order from the steel sheet side, an electrodeposition paint layer, an intermediate paint layer, a base coat layer and a clear coat layer.
The thickness of the electrodeposition paint layer is, for example, 15 to 20 $\mu$m. The thickness of the intermediate paint layer is, for example, 25 to 35 $\mu$m. The thickness of the base coat layer is 10 to 15 $\mu$m. The thickness of the clear coat layer is 30 to 40 $\mu$m.

<Regarding chemical composition>

The following chemical composition can be exemplified as the chemical composition of the steel sheet according to the present embodiment.

A chemical composition consisting of, in mass%,
C: 0.020% or more and 0.145% or less,
Si: 0.010% or more and 3.000% or less,
Mn: 0.45% or more and 2.25% or less,
P: 0.030% or less,
S: 0.020% or less,
sol. Al: 0.30% or less,
N: 0.0100% or less,
B: 0 to 0.0050%,
Mo: 0 to 0.80%,
Ti: 0 to 0.20%,

Nb: 0 to 0.10%,
Cr: 0 to 0.70%, and
Ni: 0 to 0.25%,
with the balance being Fe and impurities.

Here, the term "impurities" means components which, when industrially producing the steel sheet, are mixed in due to various causes during the production processes, including raw material such as ore or scrap, and which are not components that are intentionally added to the steel sheet according to the present embodiment.

[Si: 0.010% to 3.000%]

Si is an element necessary for precipitating a large amount of fine precipitates such as iron carbide for suppressing dislocation cells. When the content of Si is less than 0.500%, even if segregation has occurred in a uniform structure, a sufficient action and effect cannot be obtained and coarse precipitates are generated, and thus formation of dislocation cells cannot be suppressed. Hence, the content of Si is set to 0.010% or more, and is more preferably set to 0.050% or more. On the other hand, when the content of Si is more than 3.000%, the effect of precipitating a large amount of fine precipitates is saturated, resulting in an unnecessary increase in cost and a deterioration in the surface property. Therefore, the content of Si is set to 3.000% or less, and is preferably set to 2.000% or less.

<Regarding production method>

Next, a preferable method for producing the panel according to the present embodiment will be described. As long as the panel according to the present embodiment has the characteristics described above, the advantageous effects thereof can be obtained, irrespective of the production method. However, since the panel can be stably produced according to the following method, the following method is preferable.

[Method for producing high-strength steel sheet having small unevenness]

As one example, a high-strength steel sheet as the starting material of a steel sheet that is excellent in surface appearance because of small unevenness on the surface can be produced by the following production method. Specifically, a high-strength steel sheet as the starting material of a steel sheet constituting the panel according to the present embodiment can be produced by a production method including the following processes (i-i) to (i-vi).

(i-i) A heating process of heating a cast piece having the aforementioned chemical composition to 1000°C or more.
(i-ii) A hot rolling process of hot rolling the cast piece at 950°C or less to obtain a hot-rolled steel sheet.
(i-iii) A stress imparting process of imparting stress to the hot-rolled steel sheet after the hot rolling process so that an absolute value of $\sigma_s$ that is a residual stress in the surface becomes 150 MPa to 450 MPa.
(i-iv) A cold-rolling process of subjecting the hot-rolled steel sheet after the stress imparting process to cold rolling in which $R_{CR}$ that is an accumulative rolling ratio is 70 to 90% to obtain a cold-rolled steel sheet.
(i-v) An annealing process of heating the cold-rolled steel sheet in a manner such that an average heating rate in a range from 300°C to a holding temperature T1°C that satisfies the following Formula (1) is 1.5 to 10.0°C/sec, and thereafter holding the heated steel sheet at the holding temperature T1°C for 30 to 150 seconds to perform annealing.

$$1275 - 27 \times \ln(\sigma_s) - 4.5 \times R_{CR} \leq T1 \leq 1275 - 25 \times \ln(\sigma_s) - 4 \times R_{CR} \quad ...(1)$$

(i-vi) A cooling process of cooling the cold-rolled steel sheet after the annealing process to a temperature range of 550 to 650°C in a manner so that an average cooling rate in a range from T1°C to 650°C is 1.0 to 10.0°C/sec, and thereafter cooling the cooled steel sheet to a temperature range of 200 to 490°C in a manner so that the average cooling rate is 5.0 to 500.0°C/sec.

Note that, the production method may include, after the cooling process, a plating process of forming a plating layer on the surface.
When imparting stress to the hot-rolled steel sheet in the stress imparting process, a residual stress $\sigma_s$ in the surface of the hot-rolled steel sheet is made to fall within the range of 150 MPa to 450 MPa by rubbing the steel sheet surface with a brush. The brush used to impart stress is a brush used for polishing and grinding, and a brush with the model number M-33 manufactured by Hotani Co., Ltd can be mentioned as an example. The brush, for example, has a structure in which a large number of hard bristles are provided on the outer peripheral surface of a cylindrical brush body. Regarding the manner in which the brush is moved when imparting stress, for example, the brush is rotated at a rotation speed of 1200 rpm so as to face the direction in which the steel sheet is advancing (so that the axis of rotation of the brush body is parallel to the width direction of the hot-rolled steel sheet). The residual stress $\sigma_s$ can be changed by changing the contact pressure of the brush on the hot-rolled steel sheet. The imparting of the residual stress $\sigma_s$ to the hot-rolled steel sheet by the brush is not performed for the purpose of changing the sheet thickness of the hot-rolled steel sheet, and the sheet thickness of the hot-rolled steel sheet is maintained at a thickness that is the same before and after the stress imparting process. In the stress imparting process, the residual stress $\sigma_s$ can be imparted to the outer layer region by rubbing the surface of the hot-rolled steel sheet without changing the sheet thickness of the hot-rolled steel sheet. For example, in a process in which the surface of a hot-rolled steel sheet is subjected to grinding using a grinding tool to make the sheet thickness thinner, it cannot be said that the residual stress which is imparted in the stress imparting process of the present invention is generated.

[Method for producing panel from high-strength steel sheet]

Next, an example of a method for producing a panel that is excellent in dent resistance from a high-strength steel sheet completed by passing through the aforementioned annealing process (final annealing) is described. That is, an example of a method for producing a panel excellent in both surface appearance and dent resistance by giving the high-strength steel sheet itself a characteristic of being excellent in surface appearance and, in addition, performing a heat treatment to impart excellent dent resistance to the high-strength steel sheet will be described.

In the present embodiment, in a preferable method for producing the panel, a heat treatment is performed before and after performing cold plastic working on the high-strength steel sheet after final annealing.

This method includes:

(ii-i) a first heat treatment process of subjecting a high-strength steel sheet to a heat treatment in which the high-strength steel sheet is held at a temperature T11 satisfying Formula (2) below for 60 to 900 seconds;
(ii-ii) a blanking process of cutting the high-strength steel sheet into the shape of a blank;
(ii-iii) a cold plastic working process of performing cold plastic working on the blank to form a steel member;
(ii-vi) a painting process of painting the steel member; and
(ii-v) a second heat treatment process of subjecting the steel member to a heat treatment in which the steel member is held at a temperature T12 within a range of 80 to 200°C for 300 to 1800 seconds.

$$80 \times Si + 100 \leq T11 \leq 125 \times Si + 250 \ ...(2)$$

Where, Si in the above Formula (2) means a content (mass%) of Si in the high-strength steel sheet.

[First heat treatment process]

The high-strength steel sheet that underwent final annealing is subjected to a first heat treatment process. The first heat treatment process is, for example, a tempering process.

The temperature T11 of the high-strength steel sheet is preferably set within the range of the aforementioned Formula (2). By the temperature T11 in the first heat treatment process being not less than the aforementioned lower limit, an effect that the major axis of precipitates is 0.05 $\mu$m or more is obtained. Further, by the temperature T11 being not more than the aforementioned upper limit, an effect that the number density is high and the major axis of precipitates is 1.00 $\mu$m or less is obtained.

In the first heat treatment process, preferably the high-strength steel sheet is held for 60 to 900 seconds at a constant temperature T11 within the range of the aforementioned Formula (2). By the holding time at the temperature T11 in the first heat treatment process being not less than the aforementioned lower limit, an effect that iron carbides are stably precipitated is obtained. Further, by the holding time at the temperature T11 being not more than the aforementioned upper limit, an effect that the number density of precipitates can be raised and the major axis of the precipitates is 1.00 $\mu$m or less is obtained. The high-strength steel sheet after the first heat treatment has the property described above that, within laths of martensite in the region, the number density of precipitates having a major axis of 0.05 to 1.00 $\mu$m and an aspect ratio of 3 or more is 15 precipitates/$\mu$m$^2$ or more.

[Blanking process]

The high-strength steel sheet that underwent the first heat treatment is formed into a blank by blanking processing in which the high-strength steel sheet is cut to a predetermined size. Note that, the high-strength steel sheet may be subjected to the first heat treatment after being formed into a blank.

[Cold plastic working process]

Next, the blank is subjected to cold plastic working to thereby form a steel member in a state before being subjected to bake-finishing. Specifically, by subjecting the blank to form-forming as the cold plastic working, a steel member is formed in a state before being subjected to bake-finishing. The shape of the steel member corresponds to the shape of the panel.

By performing the form-forming, prestrain is imparted to the entire blank to thereby form a steel member. The amount of strain imparted by the form-forming is, for example, about 2%. By appropriately controlling the forming conditions such as the operating amount of the punch and appropriately designing the press tooling for the cold plastic working to apply a prestrain of about 2%, the bake hardening value can be sufficiently increased.

[Painting process]

Next, painting of the steel member is performed. This painting includes, for example, three kinds of painting: electrodeposition painting, middle coat painting, and finish coat painting (base and clear coats). Water-based paints or solvent paints are used for the painting. In the electrodeposition painting process, electrodeposition painting is performed with respect to the entire surface of the steel member in a state in which the steel member has been submerged in an electrodeposition tank in which the paint is stored. Further, in the middle coat painting process, middle coat painting is performed with respect to the entire surface of the steel member by spraying the paint from a spray nozzle onto the steel member by means of a painting robot or by manual operation performed by a worker. Further, in the finish coat painting process, finish coat painting is performed with respect to the entire surface of the steel member by spraying the paint from a spray nozzle onto the steel member by means of a painting robot or by manual operation performed by a worker. By this means, the surface of the steel member is composed of a paint film having a thickness of about 100 $\mu$m.

[Second heat treatment process]

A second heat treatment process is included in the aforementioned painting process. The second heat treatment is a bake-drying treatment for baking the paint film onto the steel member, and a treatment that subjects the steel member to bake hardening. With regard to the time at which to perform the second heat treatment process during the three kinds of painting processes, the second heat treatment process may be performed at a stage that is after the electrodeposition painting and before the middle coat painting, or may be performed between one round of middle coat painting and another round of middle coat painting when the middle coat painting is performed multiple times, or may be performed at a stage that is after the middle coat painting and before the finish coat painting, or may be performed between one round of finish coat painting and another round of finish coat painting when the finish coat painting is performed multiple times, or may be performed after the finish coat painting.

The temperature T12 of the steel member in the second heat treatment process is preferably set within a range of 80°C to 200°C as described above. By the temperature T12 in the second heat treatment process being not less than the aforementioned lower limit, the paint can be reliably baked onto the steel member, and a hardening treatment can be performed more reliably on the steel member. Further, if the temperature T12 is more than the aforementioned upper limit, the cost of the production process for producing the panel will increase. Therefore, preferably the upper limit of the holding temperature is set to 200°C or less.

The holding time at the temperature T12 in the second heat treatment is preferably set within a range of 300 to 1800 seconds as described above. By the holding time in the second heat treatment process being not less than the aforementioned lower limit, the paint can be reliably baked onto the steel member, and a hardening treatment can be performed more reliably on the steel member. Further, if the holding time is more than 1800 seconds, the cost of the production process for producing the panel will increase. Therefore, preferably the holding time is set to 1800 seconds or less.

In the second heat treatment process, preferably the steel member is continuously held for 300 to 1800 seconds at the constant temperature T12 within the aforementioned temperature range. By the holding time at the temperature T12 in the second heat treatment process being not less than the aforementioned lower limit, an effect that the paint is more reliably baked is obtained. Further, if the holding time at the temperature T12 is more than the aforementioned upper limit, the cost of producing the panel will increase. Therefore, preferably the holding time at the temperature T12 is set to 1800 seconds or less.

By undergoing the above painting processes including the second heat treatment process, the panel of the present embodiment is completed.

In the present embodiment, the homogeneity of a high-strength steel sheet as a starting material of a panel is increased by a first heat treatment process such as tempering, and strain uniformly enters during cold plastic working performed on a blank. As a result, a bake hardening value in the second heat treatment as a bake hardening treatment can be increased more. By this means, a panel can be realized, which is excellent in both appearance after being formed from a starting material and dent resistance.

As described above, according to the present embodiment, in a panel composed of a steel sheet including martensite, a surface roughness parameter (Sa) at a flat part of a center-side portion is Sa $\leq 0.500$ $\mu$m. By this means, the unevenness of the panel surface can be made small. In addition, in laths of the martensite, the number density of precipitates having a major axis of 0.05 $\mu$m to 1.00 $\mu$m and an aspect ratio of 3 or more is 15 precipitates/$\mu$m$^2$ or more. By this means, the amount of locked dislocations attributable to carbon or the like that diffuses during bake hardening can be increased, and as a result, the bake hardening value in the second heat treatment process can be markedly increased. In addition, $YS_1/YS_2$ in a tensile test specimen cut out from the flat part is 0.90 to 1.10. By this means, strain uniformly enters the entire flat part and end part of the panel, and bake hardening during paint-baking occurs uniformly over the entire steel sheet that includes the flat part and the end part. By defining the surface roughness parameter Sa, the number density of precipitates, and $YS_1/YS_2$ as described above, with respect to a panel, particularly an exterior panel of an automobile, in most of the sheet thickness range that is practically used, both an excellent surface property and excellent dent resistance can be realized. Further, with respect to panels for which there is a demand in recent years to make the walls even thinner, only after taking into consideration both ensuring an excellent surface property and achieving excellent dent resistance in a compatible manner, the condition that the surface roughness parameter Sa is less than or equal to 0.500 $\mu$m, and the condition that the number density of precipitates within laths is 15 precipitates/$\mu$m$^2$ or more have been conceived. In addition, from the viewpoint of securing homogeneous dent resistance, the condition that $YS_1/YS_2$ is 0.90 to 1.10 has been conceived. By the number density of precipitates being made 15 precipitates or more, and furthermore, by $YS_1/YS_2$ being made to fall within the range of 0.90 to 1.10, the homogeneity of deformation during forming of a steel sheet is increased, and as a result the occurrence of unevenness on the steel sheet surface can also be suppressed. Thus, the panel of the present embodiment is a panel that can synergistically exhibit the advantageous effects of an excellent surface property and excellent dent resistance in a thin-walled panel.

EXAMPLES

Next, Examples of the present invention will be described. The conditions adopted in the Examples are one example of conditions adopted to confirm the operability and advantageous effects of the present invention, and the present invention is not limited to this one example of the conditions. The present invention can adopt various conditions as long as the objective of the present invention is achieved without departing from the gist of the present invention.

<Preparation of high-strength steel sheet>

Steels having the chemical composition shown in Cast Piece Nos. A to E in Table 1 were melted and continuously cast to produce slabs having a thickness of 240 to 300 mm Each of the obtained slabs was heated at a temperature shown in Table 2. The heated slabs were hot-rolled under conditions shown in Table 2 and were coiled. Note that, the hot rolling process was performed as follows: after heating the slab, rough rolling was performed in a temperature range of 1050°C or more to the heating temperature or less, and at such time the rough rolling included eight passes of reverse rolling with a rolling reduction of 30% or less per pass, with the rolling reduction difference (return path - forward path) between two passes during one reciprocation being set to 10%, and after the rough rolling the slab was held for seven seconds until finish rolling, and next in the finish rolling process, finish rolling was performed at four consecutive roll stands in which the rolling reduction at the first stand was 20%.

Thereafter, the coils were uncoiled and stress was imparted to each hot-rolled steel sheet. At such time, while measuring the outer layer residual stress on-line using a portable X-ray residual stress measuring device, a contact pressure of a brush on the steel sheet surface was changed so that the residual stress $\sigma_s$ was as shown in Table 2. A brush with the model number M-33 manufactured by Hotani Co., Ltd was used. Regarding the manner in which the brush was moved when imparting stress, the brush was rotated at a rotation speed of 1200 rpm so as to face the direction in which the steel sheet advanced.

Thereafter, by performing cold rolling with a rolling reduction (accumulative rolling ratio $R_{CR}$) shown in Table 2, steel sheets A1 to A2, B1 to B3, C1 to C2, D1 to D2, and E1 to E4 were obtained.

Thereafter, annealing of the steel sheets was performed under the conditions shown in Table 3, the steel sheets were cooled to a temperature range of 550 to 650°C at cooling rates shown in Table 3, and thereafter cooling was performed to temperatures shown in Table 3. Further, some steel sheets were plated in various ways to form a plating layer on the surface. In the tables, CR denotes that no plating was performed, GI denotes hot-dip galvanizing was performed, GA denotes galvannealing was performed, EG denotes electroplating was performed, and Zn-Al-Mg or the like denotes that plating including these elements was performed.

<Manufacture of bent component using high-strength steel sheet>

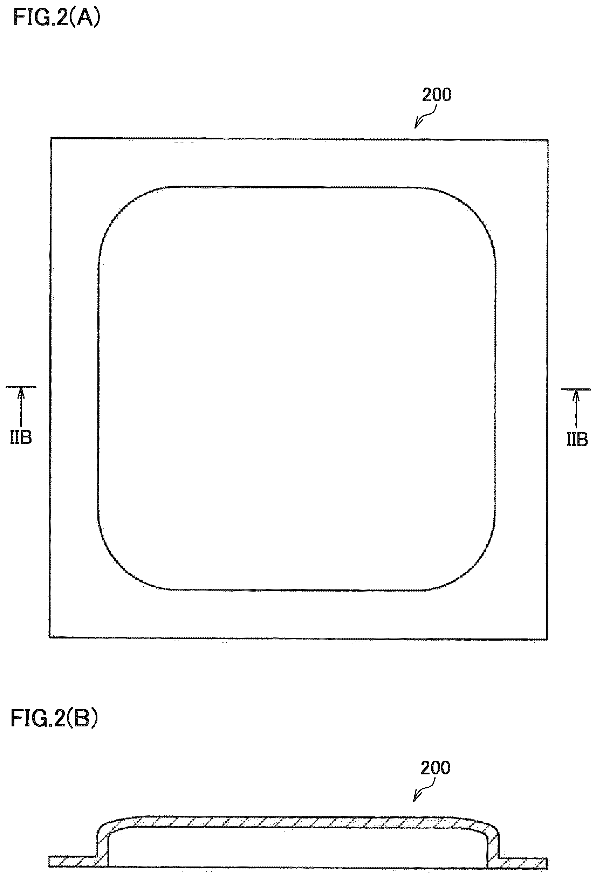

A first heat treatment (tempering) was performed on the steel sheets A1 to A2, B1 to B3, C1 to C2, D1 to D2, and E1 to E4 that were high-strength steel sheet (cold-rolled steel sheets). The temperature of the high-strength steel sheet as well as the holding time at that temperature in the first heat treatment are shown in Table 4. Each high-strength steel sheet on which the first heat treatment had been performed was then subjected to cold plastic working shown in Table 4 to form the cold-rolled steel sheet into the shape of a panel. The panel was, as illustrated in Figure 2(A) and Figure 2(B), a panel 200 that was formed in a hogback shape in which a ridge R of the flat part of a center portion was 1200 mm from a 400 mm square steel sheet. Note that, Figure 2(A) is a plan view of a component 200 used for dent resistance evaluation. Figure 2(B) is a cross-sectional view along a line IIB-IIB in Figure 2(A). Next, the component formed in the shape of a panel was subjected to a second heat treatment (bake hardening) to thereby manufacture a component that was a panel. The component numbers are as listed in Table 4. The temperature of the component as well as the holding time at that temperature in the second heat treatment are shown in Table 4.

Observation of the steel micro-structure of the outer layer region and interior region of each of the obtained components was performed. Further, the number density of precipitates having a major axis of 0.05 $\mu$m to 1.00 $\mu$m and having an aspect ratio of 3 or more was measured in laths of martensite in the interior region. The results are shown in Table 5.

The volume fraction of martensite in the outer layer region was determined by the following method.

A sample (20 mm in the rolling direction $\times$ 20 mm in the width direction $\times$ the thickness of the steel sheet) for steel micro-structure (microstructure) observation was collected from a flat part of the steel sheet of each obtained component, and observation of the steel micro-structure in a range from the outer layer to the 1/4 sheet thickness position of the steel sheet was performed using an optical microscope, and the area fraction of martensite in a range from the surface of the steel sheet (in a case where plating was present, the surface excluding the plating layer) to a depth of 20 $\mu$m was calculated. In order to prepare the sample, a sheet thickness cross section in a direction orthogonal to the rolling direction was polished as an observation section and was etched with the LePera reagent.

"Microstructures" were classified based on an optical micrograph at a magnification of x500 obtained after etching with the LePera reagent. In a region ranging from the outer layer to a 1/4 thickness position in the steel sheet etched with the LePera reagent, 10 visual fields were observed at a magnification of $\times$500, a region portion from the outer layer to a position of 20 $\mu$m of the steel sheet in the micro-structure image was designated, and image analysis was performed using image analysis software "Photoshop CS5" manufactured by Adobe Inc. to determine the area fraction of martensite. The area fraction of martensite was measured by performing image analysis in a similar manner as described above for the visual fields at the total of 10 places, and the obtained area fraction values were then averaged to thereby calculate the volume fraction of martensite in the outer layer region.

Further, the average grain diameter of martensite in the outer layer region was determined by the following method.

Similarly to the method for determining the volume fraction of the martensite, 10 visual fields were observed at a magnification of $\times$500 in a region ranging from the outer layer to a 1/4 thickness position in the steel sheet etched with the LePera reagent, a region of 20 $\mu$m $\times$ 200 $\mu$m from the outer layer of the steel sheet in the micro-structure image was selected, image analysis was performed using image analysis software "Photoshop CS5" manufactured by Adobe Inc., and the area occupied by martensite and the number of grains of martensite were calculated, respectively. By adding up the values and dividing the area occupied by martensite by the number of grains of martensite, the average area per grain of martensite was calculated. The equivalent circular diameter was calculated based on the area and the number of grains, and the calculated value was adopted as the average grain diameter of martensite.

The volume fraction and average grain diameter of martensite in the interior region were also obtained by using a steel sheet etched with the LePera reagent, selecting a range from a position that was more than 20 $\mu$m from the surface of the sample in the sheet thickness direction to a position at 1/4 of the sheet thickness, and performing analysis by a similar method as the method used for analyzing the outer layer region.

The term "number density of precipitates" refers to the density of precipitates having a major axis of 0.05 $\mu$m or more and 1.00 $\mu$m or less and an aspect ratio of 1:3 or more. The morphology and number density of the precipitates is determined by observation using an electron microscope, and in the present Examples, measurement was conducted by TEM (Transmission Electron Microscope) observation. Specifically, with regard to the interior region, taking the surface of the flat part of the steel sheet as a reference, a thin film sample was cut out from a region from a 3/8 position to a 1/4 position of the thickness of the flat part of the steel sheet. The thin film sample was then observed in a bright field, and by using an appropriate magnification of $\times$ 10,000 to $\times$100,000, an area of 1 $\mu$m$^2$ was cut out, and precipitates having a major axis of 0.05 $\mu$m or more and 1 $\mu$m or less and an aspect ratio of 1:3 or more were counted and determined. This operation was performed in five or more consecutive visual fields, and the average of the obtained values was taken as the number density.

In addition, with regard to the obtained components, a yield stress ratio $YS_1/YS_2$ between the flat part and the end part, a ratio $YS_1/TS_1$ between yield stress and tensile strength, the tensile strength, the hardness of the flat part, and the sheet thickness of the panel were measured. The results are shown in Table 6. The steel type of the component is also shown in Table 6. In Table 6, "DP steel" indicates dual phase steel, and "TRIP steel" indicates transformation induced plasticity steel.

Regarding the calculation of the yield stress ratio $YS_1/YS_2$, the yield stress $YS_1$ was determined by a tensile test performed in accordance with JIS Z 2241 using a Japanese Industrial Standard (JIS) Z2241-5 specimen obtained by cutting out the flat part in a direction perpendicular to the rolling direction. The yield stress $YS_2$ was determined by a tensile test performed in accordance with JIS Z 2241 using a Japanese Industrial Standard (JIS) Z2241-5 specimen obtained by cutting out the end part in a direction perpendicular to the rolling direction.

Regarding the calculation of the stress ratio $YS_1/TS_1$, the tensile strength $TS_1$ was determined by a tensile test performed in accordance with JIS Z 2241 using a Japanese Industrial Standard (JIS) Z2241-5 specimen obtained by cutting out the flat part in a direction perpendicular to the rolling direction.

The hardness of the flat part was measured in accordance with JIS Z2244: 2009 by a micro Vickers hardness meter. Measurement was conducted when the test force was set to 4.9 N at an arbitrary five points at a 1/4 depth position from the surface in a cross section of the steel sheet. The average of the obtained Vickers hardness values was taken as the hardness of the flat part of the component.

[Table 1]

[Table 1]

| Cast Piece No. | Chemical Composition (mass%) | | | | | | | | | | | |
|---|---|---|---|---|---|---|---|---|---|---|---|---|
| | C | Si | Mn | P | S | Al | N | Mo | Cr | Ti | Nb | Ni |
| A | 0.04 | 0.05 | 1.05 | 0.005 | 0.004 | 0.11 | 0.0022 | 0.29 | 0.31 | | | |
| B | 0.08 | 0.15 | 2.00 | 0.01 | 0.002 | 0.02 | 0.003 | | | 0.015 | 0.015 | 0.001 |
| C | 0.07 | 0.45 | 1.85 | 0.015 | 0.005 | 0.03 | 0.005 | | 0.001 | | | |
| D | 0.09 | 1.2 | 1.5 | 0.01 | 0.003 | 0.04 | 0.0044 | | | | | |
| E | 0.08 | 0.55 | 2.18 | 0.015 | 0.002 | 0.03 | 0.0033 | | 0.4 | 0.026 | | |

[Table 2]

[Table 2]

| Cast Piece No. | Steel Sheet No. | Heating Process | Hot Rolling Process | Coiling Process | Stress imparting process | Cold-Rolling Process |
|---|---|---|---|---|---|---|
| | | Heating Temperature °C | Finish Rolling Temperature°C | Coiling Temperature °C | Residual Stress $\sigma_s$ MPa | Accumulative Rolling Ratio RCR % |
| A | A1 | 1200 | 890 | 700 | 248 | 84 |
| A | A2 | 1200 | 890 | 710 | 216 | 80 |
| B | B1 | 1100 | 880 | 480 | 185 | 86 |
| B | B2 | 1130 | 900 | 450 | 302 | 85 |
| B | B3 | 1130 | 910 | 460 | 190 | 82 |
| C | C1 | 1200 | 890 | 700 | 174 | 78 |
| C | C2 | 1250 | 880 | 700 | 71 | 78 |
| D | D1 | 1210 | 870 | 600 | 169 | 80 |

(continued)

| Cast Piece No. | Steel Sheet No. | Heating Process | Hot Rolling Process | Coiling Process | Stress imparting process | Cold-Rolling Process |
| --- | --- | --- | --- | --- | --- | --- |
| | | Heating Temperature °C | Finish Rolling Temperature°C | Coiling Temperature °C | Residual Stress σ$_s$ MPa | Accumulative Rolling Ratio RCR % |
| D | D2 | 1200 | 860 | 620 | 202 | 70 |
| E | E1 | 1230 | 910 | 550 | 168 | 76 |
| E | E2 | 1250 | 900 | 550 | 230 | 76 |
| E | E3 | 1100 | 900 | 540 | 168 | 89 |
| E | E4 | 1100 | 900 | 540 | 168 | 76 |

[Table 3]

[Table 3]

| Steel Sheet No. | Annealing Process | | | Cooling Process | | | Surface Finishing |
| --- | --- | --- | --- | --- | --- | --- | --- |
| | Average Heating Rate °C/s | Holding Temperature (T1) °C | Annealing Time s | Average Cooling Rate in a Range from T1°C to 650°C °C/s | Average Cooling Rate to a Temperature Range of 200 to 490°C °C/s | Cooling Finish Temperature °C | Plating |
| A1 | 3.7 | 785 | 90 | 4.3 | 10 | 450 | GA |
| A2 | 5.4 | 650 | 120 | 5.7 | 11 | 350 | CR |
| B1 | 2.7 | 790 | 120 | 3.1 | 31 | 420 | Zn-Al-Mg |
| B2 | 3.2 | 780 | 300 | 4.1 | 78 | 460 | GA |
| B3 | 3.7 | 840 | 120 | 5.6 | 79 | 450 | CR |
| C1 | 8.3 | 800 | 40 | 9.2 | 92 | 350 | CR |
| C2 | 7.5 | 830 | 60 | 7.8 | 72 | 450 | GI |
| D1 | 9.7 | 810 | 120 | 5.2 | 35 | 400 | CR |
| D2 | 7.5 | 840 | 50 | 4.8 | 56 | 220 | EG |
| E1 | 4.2 | 800 | 70 | 3.7 | 41 | 460 | GI |
| E2 | 2.8 | 820 | 150 | 2 | 80 | 470 | GA |
| E3 | 3.7 | 840 | 120 | 1.7 | 17 | 440 | CR |
| E4 | 4.2 | 800 | 70 | 3.7 | 41 | 460 | GA |
| Underlining indicates value or the like is outside range recommended in the present description. | | | | | | | |

[Table 4]

[Table 4]

| Steel Sheet No. | Component No. | First Heat Treatment Process (Tempering) | | Cold Plastic Working Process | Second Heat Treatment ' Process | | Remarks |
|---|---|---|---|---|---|---|---|
| | | Temperature °C | Time s | Forming Method | Temperature °C | Time s | |
| A1 | A1a | 220 | 750 | FORM-FORMING | 170 | 900 | Example |
| A1 | A1b | 150 | 420 | FORM-FORMING | 170 | 1200 | Example |
| A2 | A2a | 200 | 120 | FORM-FORMING | 150 | 900 | Comparative Example |
| B1 | B1a | 200 | 800 | FORM-FORMING | 170 | 1200 | Example |
| B1 | B1b | 220 | 420 | DRAW FORMING | 180 | 900 | Comparative Example |
| B2 | B2a | 220 | 600 | FORM-FORMING | 170 | 1200 | Comparative Example |
| B3 | B3a | 150 | 720 | FORM-FORMING | 170 | 900 | Comparative Example |
| C1 | C1a | 270 | 420 | FORM-FORMING | 150 | 900 | Example |
| C1 | C1b | 150 | 600 | DRAW FORMING | 120 | 1200 | Comparative Example |
| C2 | C2a | 170 | 600 | FORM-FORMING | 160 | 1200 | Comparative Example |
| D1 | D1a | 320 | 100 | FORM-FORMING | 120 | 1200 | Example |
| D1 | D1b | <u>50</u> | 600 | FORM-FORMING | 110 | 600 | Comparative Example |
| D2 | D2a | 320 | 600 | FORM-FORMING | 180 | 900 | Example |
| E1 | E1a | 250 | 600 | FORM-FORMING | 170 | 1200 | Example |
| E1 | E1b | <u>450</u> | 420 | FORM-FORMING | 80 | 1200 | Comparative Example |
| E2 | E2a | 250 | 600 | FORM-FORMING | 100 | 1500 | Example |
| E3 | E3a | 300 | 90 | FORM-FORMING | 160 | 1200 | Comparative Example |
| E4 | E4a | 280 | 120 | FORM-FORMING | 170 | 1200 | Example |
| Underlining indicates value or the like is outside range recommended in the present description. | | | | | | | |

[Table 5]

[Table 5]

| Comp onent No. | Outer Layer Region | | Interior Region | | Number Density of Precipitates in Laths of Martensite (Number/$\mu$m$^2$) | Remarks |
|---|---|---|---|---|---|---|
| | Volume Fraction of Martensite (%) | Average Grain Diameter of Martensite ($\mu$m) | Volume Fraction of Martensite (%) | Average Grain Diameter of Martensite ($\mu$m) | | |
| A1a | 1.5 | 1.1 | 4.8 | 1.5 | 22 | Example |
| A1b | 1.6 | 1.5 | 5.2 | 1.9 | 24 | Example |
| A2a | <u>0</u> | <u>0</u> | <u>1.1</u> | <u>0.8</u> | 22 | Comparative Example |
| B1a | 7.6 | 2.4 | 13.5 | 3.5 | 35 | Example |
| B1b | 8.9 | 2.6 | 14 | 3.6 | 37 | Comparative Example |
| B2a | <u>0</u> | <u>0</u> | 14.2 | 3.5 | 31 | Comparative Example |
| B3a | <u>15.4</u> | 2.8 | 16.4 | 3.8 | 28 | Comparative Example |
| C1a | 11.2 | 2.1 | 15.6 | 3.6 | 37 | Example |
| C1b | 12.6 | 2.2 | 17.4 | 3.9 | 31 | Comparative Example |
| C2a | 12.8 | <u>5.3</u> | 19.3 | 4.1 | 38 | Comparative Example |
| D1a | 10.2 | 2.8 | 16.5 | 2.9 | 42 | Example |
| D1b | 10.6 | 2.9 | 15.5 | 3 | <u>2</u> | Comparative Example |
| D2a | 11.6 | 3.3 | 16.5 | 3.4 | 42 | Example |
| E1a | 12.4 | 3.8 | 23.5 | 2.5 | 48 | Example |
| E1b | 10.1 | 3.4 | 22.4 | 3.8 | <u>5</u> | Comparative Example |
| E2a | 3.1 | 1.1 | 23.4 | 3.7 | 45 | Example |
| E3a | <u>16.1</u> | <u>5.5</u> | <u>25.5</u> | 4.9 | 38 | Comparative Example |
| E4a | 14.5 | 3.9 | 24.5 | 4.5 | 45 | Example |
| Underlining indicates value or the like is outside range recommended in the present description. | | | | | | |

[Table 6]

[Table 6]

| Comp onent No. | YS1/YS2 | YS$_1$/TS$_1$ | Tensile Strength (MPa) | Hardnes s of Flat Part(Hv) | Sheet Thicknes s (mm) | Steel Grade | Remarks |
|---|---|---|---|---|---|---|---|
| A1a | 0.95 | 0.86 | 442 | 153 | 0.36 | DP steel | Example |

(continued)

| Comp onent No. | YS1/YS2 | YS$_1$/TS$_1$ | Tensile Strength (MPa) | Hardnes s of Flat Part(Hv) | Sheet Thicknes s (mm) | Steel Grade | Remarks |
|---|---|---|---|---|---|---|---|
| A1b | 0.98 | <u>0.81</u> | 438 | 150 | 0.38 | DP steel | Example |
| A2a | 1.01 | 0.89 | <u>352</u> | <u>115</u> | 0.45 | DP steel | Comparative Example |
| B1a | 0.97 | 0.89 | 551 | 191 | 0.38 | DP steel | Example |
| B1b | <u>1.52</u> | 0.91 | 542 | 186 | 0.38 | DP steel | Comparative Example |
| B2a | 0.97 | 0.94 | 567 | 193 | 0.41 | DP steel | Comparative Example |
| B3a | 1.01 | 0.93 | 611 | 205 | 0.49 | DP steel | Comparative Example |
| C1a | 1.02 | 0.88 | 613 | 215 | 0.54 | DP steel | Example |
| C1b | <u>0.65</u> | 0.91 | 598 | 187 | 0.54 | DP steel | Comparative Example |
| C2a | 0.96 | 0.95 | 656 | 225 | 0.54 | DP steel | Comparative Example |
| D1a | 0.91 | 0.91 | 623 | 213 | 0.51 | TRIP steel | Example |
| D1b | 1.07 | 0.87 | 647 | 220 | <u>0.76</u> | TRIP steel | Comparative Example |
| D2a | 1.01 | 0.92 | 621 | 215 | 0.53 | TRIP steel | Example |
| E1a | 0.98 | 0.96 | 821 | 285 | 0.54 | DP steel | Example |
| Elb | 0.97 | 0.99 | 756 | 265 | 0.54 | DP steel | Comparative Example |
| E2a | 1.02 | 0.91 | 799 | 275 | 0.54 | DP steel | Example |
| E3a | 0.96 | 0.98 | 821 | 275 | 0.25 | DP steel | Comparative Example |
| E4a | 1.04 | 0.99 | 841 | <u>301</u> | 0.54 | DP steel | Example |
| Underlining indicates value or the like is outside range recommended in the present description ||||||||

[Table 7]

[Table 7]

| Comp onent No. | Evaluation of Surface Property | Dent Resistance Evaluation | | | Remarks |
|---|---|---|---|---|---|
| | Sa($\mu$m) | Dent Depth (mm) | Index S | Index Ratio | |
| A1a | 0.223 | 0.23 | 0.250 | 0.92 | Example |
| A1b | 0.189 | 0.21 | 0.250 | 0.84 | Example |
| A2a | 0.52 | 0.19 | 0.239 | 0.79 | Comparative Example |
| B1a | 0.324 | 0.18 | 0.234 | 0.77 | Example |
| B1b | 0.333 | 0.3 | 0.235 | 1.28 | Comparative Example |
| B2a | 0.51 | 0.21 | 0.223 | 0.94 | Comparative Example |
| B3a | 0.521 | 0.18 | 0.185 | 0.97 | Comparative Example |
| C1a | 0.398 | 0.1 | 0.162 | 0.62 | Example |
| C1b | 0.402 | 0.18 | 0.165 | 1.09 | Comparative Example |
| C2a | 0.509 | 0.1 | 0.153 | 0.65 | Comparative Example |
| D1a | 0.431 | 0.14 | 0.175 | 0.80 | Example |
| D1b | 0.494 | 0.21 | 0.170 | 1.23 | Comparative Example |
| D2a | 0.422 | 0.01 | 0.029 | 0.34 | Example |
| E1a | 0.415 | 0.08 | 0.115 | 0.70 | Example |
| E1b | 0.406 | 0.14 | 0.129 | 1.09 | Comparative Example |
| E2a | 0.408 | 0.06 | 0.119 | 0.50 | Example |
| E3a | 0.551 | 0.23 | 0.267 | 0.86 | Comparative Example |
| E4a | 0.455 | 0.05 | 0.110 | 0.45 | Example |

[Evaluation of panel]

[Evaluation of surface property of panel]

Further, evaluation of the surface appearance quality was performed with respect to each produced component. The surface property of a 3 mm square region of the flat part of the component was measured with a laser microscope to acquire a measurement surface, and after removing wavelength components of 0.8 mm or less from the measurement surface using a low-pass filter ($\lambda$s) defined by JIS B0601: 2013, the surface property was evaluated using a surface roughness parameter (Sa) defined by ISO 25178. Regarding the evaluation criterion for the surface appearance quality of the component, if Sa was 0.500 $\mu$m or less, the appearance after forming was evaluated as good.

[Dent resistance evaluation]

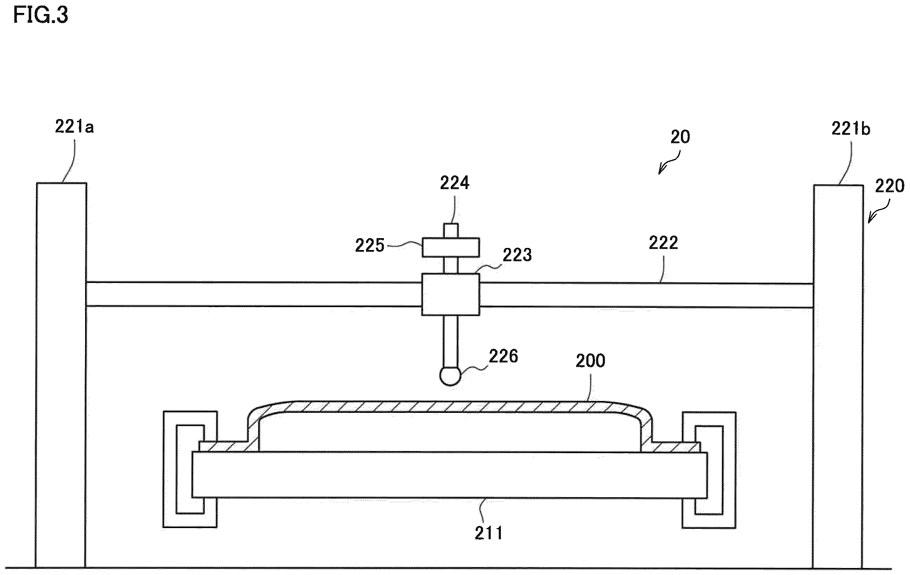

Figure 3 is a side view of a testing device 20 for measuring the dent resistance of the component 200, and is a cross-sectional view of the component 200, and with respect to the component 200, shows a cross section along a line IIB-IIB in Figure 2(A). Referring to Figure 3, the testing device 20 has a load portion 220. The load portion 220 includes two columnar supports 221a and 221b. These two columnar supports 221a and 221b are connected by a beam-shaped connection portion 222. At the center of the connection portion 222 is provided an indenter rod holding portion 223 that enables operation of the indenter rod 224 in the upward and downward directions. A held portion 225 that is supported on the indenter rod holding portion 223 is provided on the indenter rod 224.

When the indenter rod 224 moves downward by means of a motor mechanism or the like, a hemispheric indenter 226 made of steel that has a radius of 25 mm which is provided at the tip of the indenter rod 224 descends. The front end of the indenter 226 comes into contact with the center of the upper surface at approximately the center of a convex part in the center-side portion of a test panel 200 mounted on a pedestal 211, and a load controlled to a predetermined constant value is applied to the center of the upper surface. By this means a dent mark is formed in the test panel 200. Here, it is assumed that the load applied to the test panel 200 is constant. If the test panel 200 has good dent resistance, a dent mark that is formed will be shallow. In the present Examples, the dent resistance of the test panel 200 was evaluated by measuring the dent depth when a load of 20 kgf was applied to the test panel 200 by the indenter 226.

In the present Examples, the spherical indenter 226 having a radius of 25 mm was pushed into the component under a load of 20 kgf and held for 5 seconds. The dent that remained after removing the load was measured with a 3-point dial gauge having a span of 40 mm and adopted as the dent depth (mm). Since the dent depth depends on the steel type and sheet thickness of the component, a component for which the dent depth was less than an index S defined by the following equation was considered to be excellent in dent resistance. Note that, the index S indicates a dent depth serving as a criterion.

$$\text{Equation: } S = -0.0006 \times TS \times t^2 + 0.292$$

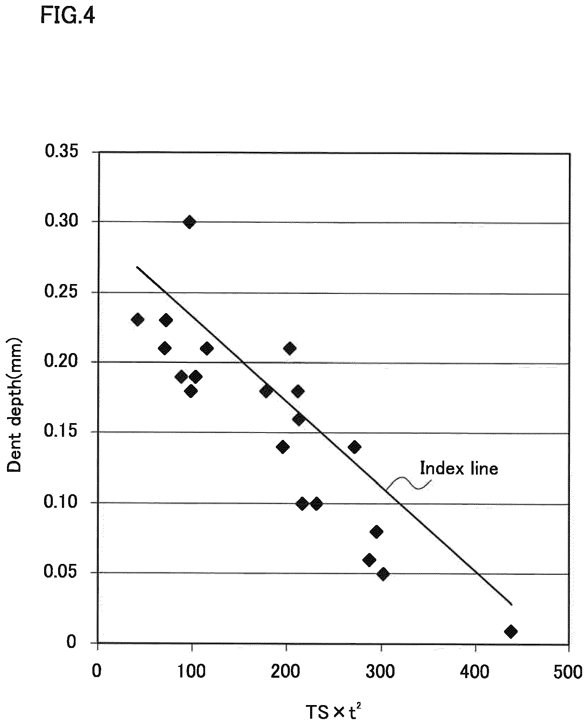

Note that, TS represents the tensile strength, and t represents the sheet thickness of the steel sheet. The relation between the index S and the dent depth of each component is illustrated in Figure 4. The abscissa in the graph in Figure 4 shows the value of $TS \times t^2$, and the ordinate shows the dent depth (mm). The line segment shown in Figure 4 indicates the index S (index line).

[Overall evaluation]

Table 7 shows the surface roughness parameter Sa and the result for the dent resistance evaluation of each component. Components for which the surface roughness parameter Sa was 0.500 μm or less were evaluated as having a small amount of surface unevenness and being excellent in appearance. Further, with respect to the dent resistance evaluation, components for which the dent depth was not more than the index S were evaluated as being excellent in dent resistance. In addition, Table 7 shows the ratio of the dent depth to the index S, and it can be seen that the smaller the value of the ratio is, the more excellent the component is in dent resistance.

Based on Tables 5 to 7, in cases (Examples) in which the surface roughness parameter Sa, the number density of precipitates in laths of martensite, and the yield stress ratio $YS_1/YS_2$ of the flat part were in a preferable range, the surface property evaluation and dent resistance evaluation of the panel passed the criteria. That is, in the Examples, it was demonstrated that formation of surface unevenness after processing was suppressed, and also that the component was excellent in dent resistance. In particular, among the Examples, the components for which the number density of precipitates in martensite laths was 40 or more were components D1a, D2a, E1a, E2a, and E4a. In the order from the lowest index ratios among all of the components, the index ratios for these components were the 9th, 1st, 6th, 3rd, and 2nd respectively. Thus, it was demonstrated that among the 18 Examples and Comparative Examples, dent resistance was particularly excellent in the Examples in which the aforementioned number density was 40 or more.

On the other hand, with regard to the cases (Comparative Examples) in which any one or more of the surface roughness parameter Sa, the number density of precipitates in laths of martensite, and the yield stress ratio $YS_1/YS_2$ of the flat part was outside the preferable range, it was demonstrated that, because the surface property was inhomogeneous, patterns or unevenness occurred, or the dent resistance was poor and the component was not suitable for use as an exterior panel. More specifically, in component A2a that is a Comparative Example, because the surface roughness parameter Sa was less than the criterion, the appearance was poor. Further, in component B1b, because the yield stress ratio $YS_1/YS_2$ was outside the preferable range, an imbalance occurred in the amount of strain at each part of the panel, and an imbalance occurred in the bake hardening value during paint-baking, and consequently the dent resistance was less than the criterion. Further, in components B2a and B3a, because the surface roughness parameter Sa was less than the criterion, the appearance was poor. In addition, in component C1b, the yield stress ratio $YS_1/YS_2$ was outside the preferable range, and consequently, for the reason mentioned above, the dent resistance was less than the criterion. Further, in component C2a, because the surface roughness parameter Sa was less than the criterion, the appearance was poor. Further, in components D1b and E1b, the number density of precipitates in martensite laths was significantly below the preferable range, and sufficient bake hardening was not performed, and consequently the dent resistance was poor. Further, in component E3a, because the surface roughness parameter Sa was less than the criterion, the appearance was poor.

INDUSTRIAL APPLICABILITY

The present invention can be widely applied as a panel.

**Claims**

1.  A panel having a steel sheet including martensite, wherein:

    a surface roughness parameter (Sa) at a flat part of a center-side portion of the panel is Sa $\leq$ 0.500 $\mu$m;
    in laths of the martensite, a number density of precipitates having a major axis of 0.05 $\mu$m to 1.00 $\mu$m and an aspect ratio of 3 or more is 15 precipitates/$\mu$m$^2$ or more; and
    a ratio $YS_1/YS_2$ between a yield stress $YS_1$ measured in a tensile test specimen cut out from the flat part and a yield stress $YS_2$ measured in a tensile test specimen cut out from an end part of the panel is 0.90 to 1.10.

2.  The panel according to claim 1, wherein:
    a ratio $YS_1/TS_1$ between the yield stress $YS_1$ and a tensile strength $TS_1$ of the tensile test specimen cut out from the flat part is 0.85 or more.

3.  The panel according to claim 1 or claim 2, wherein:
    a hardness of the flat part is 133 to 300 Hv.

4.  The panel according to any one of claim 1 to claim 3, wherein:
    a sheet thickness of the flat part is 0.20 mm to 0.60 mm.

5.  The panel according to any one of claim 1 to claim 4, wherein:
    the steel sheet is a dual phase steel sheet.

6.  The panel according to any one of claim 1 to claim 5, wherein: a tensile strength of the panel is 400 to 900 MPa.

FIG.1

Enlarged view

FIG.2(A)

200

IIB

IIB

FIG.2(B)

200

FIG.3

EP 4 095 271 A1

FIG.4

## INTERNATIONAL SEARCH REPORT

| | International application No. |
| --- | --- |
| | PCT/JP2021/002285 |

### A. CLASSIFICATION OF SUBJECT MATTER
C21D 9/46(2006.01)i; C22C 38/00(2006.01)i; C22C 38/58(2006.01)i; B62D 25/02(2006.01)i; B62D 25/06(2006.01)i
FI:    C22C38/00 301S; B62D25/02 Z; B62D25/06 Z; C22C38/00 301T; C22C38/58; C21D9/46 G; C21D9/46 M

According to International Patent Classification (IPC) or to both national classification and IPC

### B. FIELDS SEARCHED

Minimum documentation searched (classification system followed by classification symbols)
C21D9/46; C22C38/00; C22C38/58; B62D25/02; B62D25/06

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2013-151738 A (JFE STEEL CORPORATION) 08 August 2013 (2013-08-08) | 1-6 |
| A | JP 2006-118021 A (SUMITOMO METAL INDUSTRIES, LTD.) 11 May 2006 (2006-05-11) | 1-6 |
| A | JP 2013-185240 A (NIPPON STEEL & SUMITOMO METAL CORPORATION) 19 September 2013 (2013-09-19) | 1-6 |
| P, A | WO 2020/022481 A1 (NIPPON STEEL CORPORATION) 30 January 2020 (2020-01-30) | 1-6 |

☐ Further documents are listed in the continuation of Box C.   ☒ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 17 March 2021 (17.03.2021) | 30 March 2021 (30.03.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

International application No.

PCT/JP2021/002285

| Patent Documents referred in the Report | Publication Date | Patent Family | Publication Date |
|---|---|---|---|
| JP 2013-151738 A | 08 Aug. 2013 | (Family: none) | |
| JP 2006-118021 A | 11 May 2006 | (Family: none) | |
| JP 2013-185240 A | 19 Sep. 2013 | (Family: none) | |
| WO 2020/022481 A1 | 30 Jan. 2020 | JP 6677364 B1<br>TW 202012650 A | |

Form PCT/ISA/210 (patent family annex) (January 2015)

**EP 4 095 271 A1**

**REFERENCES CITED IN THE DESCRIPTION**

**Patent documents cited in the description**

• JP 2016156079 A